# EUROPÄISCHE PATENTANMELDUNG

(11) **EP 3 889 016 A1**
(43) Veröffentlichungstag der Anmeldung: **06.10.2021**
(21) Anmeldenummer: 20197979.6
(22) Anmeldetag: 24.09.2020
(51) Int. Cl.: B62J 17/083, B62J 17/06, B62J 17/08, B62J 50/16, B62K 7/00, B62K 3/00, B62K 3/06

(54) **DACHKONSTRUKTION FÜR EIN FAHRZEUG UND ZWEIRAD ODER LASTENRAD**

(30) Priorität: 02.04.2020 DE 102020109176
(71) Anmelder: Eisner, Thomas, 72770 Reutlingen (DE)
(72) Erfinder: Eisner, Thomas, 72770 Reutlingen (DE)
(74) Vertreter: Kohler Schmid Möbus Patentanwälte

(57) **Zusammenfassung**

Die Erfindung betrifft eine Dachkonstruktion (12) für ein Fahrzeug, insbesondere Zweirad (10) zum Wetterschutz eines Benutzers des Zweirads (10). Sie ist dadurch gekennzeichnet, dass die Dachkonstruktion (12) eine Tragstuktur (18), die eine Befestigungsstelle zur Befestigung an dem Fahrzeug aufweist, und eine aufwickelbare Wetterschutzeinrichtung (14, 28) umfasst, wobei die Tragstruktur (18) eine Aufwickelanordnung (16) zum Auf- und/oder Abwickeln der Wetterschutzeinrichtung (14, 28) aufweist. Weiter betrifft die Erfindung Zweiräder (10) oder Lastenräder. Durch die Erfindung lassen sich Zweiräder (10) oder Lastenräder besonders vielfältig und mit besonders hohem Benutzungskomfort einsetzen.

## Beschreibung

Die Erfindung geht aus von einer Dachkonstruktion, insbesondere für ein Zweirad zum Wetterschutz eines Benutzers des Zweirads. Ebenso betrifft die Erfindung auch ein Zweirad oder Lastenrad.

Aktuell besteht ein Trend, insbesondere elektromotorisch angetriebene, Zweiräder wie beispielsweise Pedelecs oder E-Bikes vermehrt einzusetzen. Derartige Zweiräder weisen bislang jedoch relativ hohe Anschaffungskosten auf. Aus Gründen der Wirtschaftlichkeit besteht daher ein Wunsch, derartige Zweiräder möglichst flexibel für vielfältige Aufgaben und möglichst kontinuierlich, insbesondere auch bei unterschiedlichen Witterungsbedingungen, einsetzen zu können.

Aus der EP 1 273 506 A1 ist ein Zweirad mit einer festen Dachkonstruktion bekannt.

Durch die verhältnismäßig große Querschnittsfläche des Zweirads, die sich vor allem durch die Dachkonstruktion ergibt, weist das Zweirad jedoch einen sehr hohen Windwiderstand und ein verhältnismäßig hohes Gewicht auf. Hierdurch sind die Einsatzmöglichkeiten eines solchen Zweirads eingeschränkt. Insbesondere ist auch seine Reichweite eingeschränkt. Bei bestimmten Umgebungsbedingungen, beispielsweise Schönwetterlagen, werden die Bewegungsmöglichkeiten eines Benutzers des Zweirads unnötig durch die Dachkonstruktion eingeschränkt. Auch sind die Möglichkeiten eingeschränkt, Gepäckstücke mitzunehmen.

Aufgabe der vorliegenden Erfindung ist es daher, eine Vorrichtung insbesondere für ein Zweirad sowie wenigstens ein Zweirad oder Lastenrad anzubieten, durch die sich die Einsatzmöglichkeiten und der Benutzungskomfort des Zweirads oder Lastenrads erweitern bzw. steigern lassen.

Gelöst wird die Aufgabe durch eine Dachkonstruktion für ein Fahrzeug, insbesondere für ein Zweirad zum Wetterschutz eines Benutzers des Zweirads, wobei die Dachkonstruktion eine Tragstuktur, die eine Befestigungsstelle zur Befestigung an dem Fahrzeug, insbesondere Zweirad, aufweist, und eine aufwickelbare Wetterschutzeinrichtung umfasst, wobei die Tragstruktur eine Aufwickelanordnung zum Auf- und/oder Abwickeln der Wetterschutzeinrichtung aufweist.

Einer der der Erfindung zugrundeliegenden Gedanken ist demgemäß, eine Dachkonstruktion als Vorrichtung anzubieten, die besonders flexibel verwendbar und/oder besonders einfach an wechselnde Umgebungsbedingungen anpassbar ist, sodass sich dadurch erweiterte Einsatzmöglichkeiten und ein gesteigerter Benutzungskomfort ergeben.

Die Dachkonstruktion kann vorzugsweise für ein Zweirad vorgesehen und zur Verwendung an einem Zweirad konfiguriert sein. Es ist jedoch auch denkbar, die Dachkonstruktion an einem drei- oder vierrädrigen Fahrzeug, insbesondere an einem Lastenrad, einzusetzen und entsprechend zu konfigurieren.

Die Wetterschutzeinrichtung kann vorzugsweise eine Schutzplane, ein Sonnenschutz, insbesondere Sonnensegel, ein Rollladenpanzer und/oder ein Lamellenverbund, insbesondere nach Art eines Lamellenverbunds einer Jalousie, sein und/oder eine solche beziehungsweise einen solchen aufweisen.

Der Benutzer kann somit, beispielsweise bei drohendem Schlechtwetter, die Wetterschutzeinrichtung vollständig oder zumindest teilweise auf die Dachkonstruktion aufziehen. Bei Schönwetter oder nach dem Ende einer Schlechtwetterphase kann die Wetterschutzeinrichtung aufgewickelt und verstaut werden.

Denkbar ist auch, beispielsweise bei starker Sonneneinstrahlung, die Wetterschutzeinrichtung vollständig oder teilweise auf die Dachkonstruktion aufzuziehen, um somit einen Lichtschutz und/oder eine Beschattung zu installieren.

Ein mit einer solchen Dachkonstruktion ausgestattetes Fahrzeug kann somit dann, wenn kein Schutz durch die Dachkonstruktion bzw. die Wetterschutzeinrichtung erforderlich ist, einen besonders niedrigen Luftwiderstand aufweisen. Ein mit einer solchen Dachkonstruktion ausgestattetes Fahrzeug kann demgemäß eine deutlich höhere Reichweite aufweisen als beispielsweise das in der oben zitierten Druckschrift offenbarte Zweirad.

Denkbar ist insbesondere, dass die Dachkonstruktion auch mehr als eine Wetterschutzeinrichtung und/oder mehr als eine Aufwickelanordnung aufweist. So können mehrere, insbesondere voneinander separierte, Bereiche mit Wetterschutzeinrichtungen ausgerüstet sein. Somit lässt sich die Dachkonstruktion je nach Bedarf als reiner Sonnenschutz vorzugsweise mit lediglich einer Wetterschutzeinrichtung und als Regenschutz vorzugsweise mit mehreren Wetterschutzeinrichtungen, beispielsweise mit einer frontseitigen und einer dachseitigen Wetterschutzeinrichtung, verwenden.

Die Aufwickelanordnung kann eine Aufwickelkassette aufweisen, in der die aufgewickelte Wetterschutzeinrichtung aufgenommen sein kann.

Die Aufwickelanordnung kann eine Spannvorrichtung aufweisen, sodass die Wetterschutzeinrichtung, vorzugsweise auch in nur teilweise abgewickeltem Zustand, unter Zugspannung haltbar ist.

Die Dachkonstruktion kann dazu eingerichtet sein, an dem Fahrzeug, insbesondere Zweirad oder Lastenrad, vorzugsweise lösbar, montierbar zu sein.

Die Aufwickelanordnung und/oder die Wetterschutzeinrichtung können abnehmbar ausgebildet sein. Dazu kann die Dachkonstruktion wenigstens ein Verbindungselement zur lösbaren Verbindung der Aufwickelanordnung und/oder der Wetterschutzeinrichtung aufweisen.

Die Aufwickelanordnung kann eine Rastmechanik aufweisen. Vorzugsweise kann die Rastmechanik eingerichtet sein, die Wetterschutzeinrichtung in einem oder mehreren, unterschiedlich weit aufgezogenen Zuständen zu fixieren. Insbesondere ist denkbar, dass die Aufwickelanordnung in Verbindung mit der zugehörigen Wetterschutzeinrichtung nach Art eines Roll-ups gebildet ist.

Die Wetterschutzeinrichtung kann vorzugsweise wasserabweisend, windstabil und/oder lichtundurchlässig, insbesondere UV-Lichtundurchlässig, sein. Sie kann aus einem textilen Material ausgebildet sein und/oder ein solches Material aufweisen. Alternativ ist auch denkbar, dass die Wetterschutzeinrichtung aus einem nichttextilen Material ausgebildet ist und/oder ein solches Material aufweist. Sie kann beispielsweise aus einem Kunststoff, insbesondere aus einem kunststoffbasierten Fasermaterial, ausgebildet sein und/oder einen solchen Kunststoff aufweisen. Denkbar ist auch, dass die Wetterschutzeinrichtung teilflächig oder vollflächig transparent ist. Eine solche transparente oder zumindest teiltransparente Wetterschutzeinrichtung kann insbesondere in einem Frontbereich vorgesehen sein.

Die Tragstruktur kann einen Rahmen der Dachkonstruktion bilden.

Die Dachkonstruktion kann besonders stabil ausgebildet sein, wenn die Tragstruktur wenigstens zwei zumindest abschnittsweise zueinander parallel verlaufende Tragstrukturstangen aufweist.

Für eine besonders leichtgewichtige Dachkonstruktion können die Tragstrukturstangen und/oder die Tragstruktur aus Aluminium ausgebildet sein.

Die Wetterschutzeinrichtung kann an den beiden Tragstrukturstangen führbar und/oder geführt sein. Durch die Führung an den beiden Tragstrukturstangen kann die Wetterschutzeinrichtung besonders einfach entlang der Dachkonstruktion verstellt werden. Alternativ oder ergänzend ist auch denkbar, dass die Wetterschutzeinrichtung mittels wenigstens eines Reißverschlusses und/oder wenigstens eines Punktverbinders an den Tragstrukturstangen befestigbar ist. Ein solcher Punktverbinder kann beispielsweise ein Druckknopf sein. Der Punktverbinder kann auch als Schlinge und/oder als Knopf ausgebildet sein.

Die Dachkonstruktion kann zur lösbaren Montage an einem Zweirad eingerichtet sein. Dazu kann die Befestigungsstelle zur Ausbildung einer lösbaren Befestigung an dem Fahrzeug, insbesondere Zweirad oder Lastenrad, eingerichtet sein.

Zumindest ein Teilstück der Dachkonstruktion, insbesondere wenigstens eine der Tragstrukturstangen, kann faltbar sein. Dazu kann das Teilstück bzw. die Dachkonstruktion wenigstens ein Gelenk aufweisen. Denkbar ist auch, dass die Tragstruktur oder wenigstens ein Teil der Tragstruktur faltbar sind. Hierdurch lässt sich die Dachkonstruktion besonders platzsparend verstauen. Auch vereinfacht sich dadurch ein separater Transport der Dachkonstruktion. Besonders einfach gestaltet sich ein solcher separater Transport, wenn die Dachkonstruktion zudem zur lösbaren Montage an einem Zweirad eingerichtet ist.

Die Dachkonstruktion kann eine Reinigungsvorrichtung, beispielsweise einen Scheibenwischer, aufweisen. Die Reinigungsvorrichtung kann eingerichtet sein, die Wetterschutzeinrichtung zumindest im Bereich eines Sichtbereichs des Benutzers zu reinigen. Die Reinigungsvorrichtung kann manuell bedienbar sein. Denkbar ist auch, dass sie selbsttätig arbeitet. Dazu kann die Reinigungsvorrichtung einen Feuchtesensor, insbesondere einen Regensensor, aufweisen. Sie kann auch einen Reinigungsflüssigkeitsbehälter aufweisen. Die Reinigungsvorrichtung kann auch eine Düse aufweisen. Die Düse kann zur Verteilung, insbesondere zum Sprühen, einer Flüssigkeit, beispielsweise einer Reinigungsflüssigkeit, und/oder eines Gases, beispielsweise Druckluft, eingerichtet sein.

Vorzugsweise weist die Dachkonstruktion wenigstens eine Solarzelle auf. Somit lassen sich elektrische Verbraucher und/oder Stromspeicher betreiben bzw. aufladen, ohne dass hierfür Antriebsenergie des Fahrzeugs, insbesondere Zweirad oder Lastenrad, abgezweigt werden muss.

In den Rahmen der Erfindung fällt des Weiteren ein Zweirad oder Lastenrad, an dem eine solche Dachkonstruktion anordenbar und/oder angeordnet ist. Bei dem Zweirad oder Lastenrad kann es sich beispielsweise um ein Fahrrad oder ein elektrisch motorisiertes Zweirad, insbesondere ein E-Bike oder ein Pedelec, oder Lastenrad handeln. Ein Lastenrad kann zwei, drei oder vier Räder aufweisen. Ein Lastenrad kann einen Kasten, eine Box oder eine Ladefläche zur Aufnahme von Gütern oder Personen aufweisen.

Das Zweirad kann ein Aufsitz-(Zwei)rad sein. Dabei kann unter einem Aufsitz-(Zwei)rad ein (Zwei)rad verstanden werden, bei dem - insbesondere im Gegensatz zu einem Liegefahrrad bzw. Liegezweirad - der Benutzer eine im Wesentlichen aufrechte Haltung einnimmt.

Vorzugsweise ist das Zweirad ein echt einspuriges Fahrzeug, sodass das Zweirad besonders wendig sein kann und nicht breiter ist als ein herkömmliches Zweirad ohne Wetterschutz, beispielsweise ein Mountainbike.

Denkbar ist, dass das Zweirad oder Lastenrad einen Lenkervorbau mit einem mit einer Vorderradgabel des Zweirads oder Lastenrads, insbesondere mechanisch, gekoppelten Lenkerbügel umfasst, wobei der Lenkervorbau von der Gabel getrennt angeordnet, insbesondere nach hinten versetzt, ist. Durch den Versatz des Lenkervorbaus nach hinten kann die Dachkonstruktion an ihrer Frontseite weniger steil verlaufend ausgebildet sein. Mithin kann das Zweirad oder Lastenrad auch mit montierter Dachkonstruktion und selbst im Falle einer vollständig aufgezogenen Wetterschutzeinrichtung einen geringen Luftwiderstand aufweisen.

Eine mechanische Kopplung des Lenkerbügels mit der Vorderradgabel, kann besonders einfach und ausfallsicher sein. Alternativ ist auch eine elektrische, eine hydraulische und/oder eine pneumatische Kopplung denkbar. Die Kopplung kann insbesondere als Stangengetriebe ausgebildet sein. Denkbar sind des Weiteren Ausbildungen der mechanischen Kopplung in Form eines Riemen- und/oder eines Kettenantriebs.

Weiter fällt in den Rahmen der Erfindung ein Zweirad oder Lastenrad, das als Aufsitz-(Zwei)rad ausgebildet ist und einen Lenkervorbau mit einem mit einer Vorderradgabel des Zweirads oder Lastenrads mechanisch gekoppelten Lenkerbügel umfasst, wobei der Lenkervorbau von der Vorderradgabel getrennt angeordnet, insbesondere nach hinten versetzt, ist. Ein solches Zweirad oder Lastenrad kann Vorteile eines Aufsitz-Zweirads mit den Vorteilen eines Liegerades kombinieren und somit wiederum besonders vielfältige Einsatzmöglichkeiten und einen besonders hohen Benutzungskomfort bieten.

Insbesondere ermöglicht der nach hinten versetzte Lenkervorbau eine aufrechtere Haltung des Benutzers, sodass gesundheitliche Probleme wie beispielsweise Taubheitsgefühle oder dergleichen in den Händen, insbesondere bei längeren Fahrten mit dem Zweirad oder Lastenrad, reduziert oder vollständig vermieden werden können. Auch lässt sich der Oberkörper des Benutzers während der Fahrt entlasten. Das Zweirad oder Lastenrad weist besonders vielfältige Einsatzmöglichkeiten und einen besonders hohen Benutzerkomfort auf, da sich die mögliche Fahrstrecke bzw. Reichweite, die man mit einem solchen Zweirad oder Lastenrad zurücklegen kann, ohne dass eine Pause nötig würde, verlängern lässt. Dazu kann auch dieses Zweirad oder Lastenrad ein Fahrrad oder ein elektrisch betriebenes Zweirad oder Lastenrad sein.

Bevorzugt ist an dem Zweirad oder Lastenrad eine Dachkonstruktion, insbesondere eine erfindungsgemäße Dachkonstruktion, anordenbar und/oder angeordnet.

Dabei ist es auch vorteilhaft, dass sich durch den Versatz des Lenkervorbaus eine solche Dachkonstruktion besonders einfach anbringen lässt. Insbesondere kann eine Dachkonstruktion mit einer besonders windschnittigen Form, beispielsweise mit einer besonders flach verlaufenden Frontpartie, an dem Zweirad oder Lastenrad anordenbar und/oder angeordnet sein.

Die Dachkonstruktion kann die vorangehend beschriebene Aufwickelanordnung aufweisen. In diesem Fall ist es möglich, die Wetterschutzeinrichtung einzuziehen, insbesondere aufzurollen, sobald die Umgebungsbedingungen dies zulassen. Somit lässt sich der Luftwiderstand des Zweirads oder Lastenrads bei günstigen Umgebungsbedingungen reduzieren.

Bei einem Zweirad oder Lastenrad mit von der Vorderradgabel getrenntem Lenkervorbau kann der zusätzlich gewonnene Raum zwischen dem Lenkervorbau und der Vorderradgabel des Zweirads oder Lastenrads genutzt werden, indem vor dem Lenkervorbau eine Frontgepäckaufnahme ausgebildet und/oder angeordnet ist. Die Frontgepäckaufnahme weist vorzugsweise eine Tasche, einen Korb, eine Box und/oder einen Kindersitz auf oder ist als solche bzw. solcher ausgebildet.

Die Frontgepäckaufnahme kann insbesondere derart angeordnet sein, dass sie bei montierter Dachkonstruktion ebenfalls durch die Wetterschutzeinrichtung, beispielsweise vor Wettereinflüssen, geschützt ist. Weiter ist von Vorteil, dass eine in der Frontgepäckaufnahme aufgenommene Last horizontal betrachtet hinter der Nabe des Vorderrades in der Gepäckaufnahme aufgenommen sein kann. Somit kann beim Lenken das Vorderrad verstellt werden, ohne dass die Masse der Last mitbewegt werden muss. Fahrten mit einem solchen Zweirad oder Lastenrad können somit stabiler und damit sicherer erfolgen. Dies bedeutet insbesondere bei schweren Lasten, beispielsweise einem auf einem Kindersitz sitzenden Kleinkind, einen erheblichen Sicherheitsvorteil.

Ein vorangehend beschriebenes Zweirad oder Lastenrad kann weiter verbessert werden, indem im Bereich des Vorderrads des Zweirads oder Lastenrads wenigstens ein Beinschutz zum Schutz, insbesondere zum Wetterschutz, der Beine des Benutzers anordenbar und/oder angeordnet ist. Dabei kann die Breite des Zweirads oder Lastenrads, insbesondere mit angeordnetem Beinschutz, so schmal wie möglich gehalten sein. Vorzugsweise weist sie trotz der Beinverkleidung und/oder trotz der Dachkonstruktion höchstens eine Breite entsprechend der eines üblichen Mountainbikes auf.

Der Beinschutz kann aus Kunststoff ausgebildet sein und/oder einen solchen Kunststoff aufweisen. Insbesondere kann der Beinschutz eine Schalenform aufweisen. Zur Gewichtseinsparung kann ein Teil des Beinschutzes ein textiles Material aufweisen und/oder aus einem solchen Material ausgebildet sein.

Bei einer besonders bevorzugten Ausgestaltung ist der Beinschutz abnehmbar ausgebildet. Er kann dazu eine Befestigungsstelle zur lösbaren Befestigung am Zweirad aufweisen. Insbesondere kann er eine Clipmechanik aufweisen, so dass er an- und/oder abclipbar ist. Somit lässt sich, insbesondere, wenn absehbar ist, dass es keines Schutzes bedarf, der Beinschutz vom Zweirad oder Lastenrad abnehmen. Damit kann auch in diesem Fall das Gesamtgewicht des Zweirads oder Lastenrads reduziert werden.

Auch die Dachkonstruktion kann abnehmbar ausgebildet sein. Dazu kann an der Dachkonstruktion und/oder an dem Zweirad oder Lastenrad wenigstens eine Befestigungsstelle vorgesehen sein, die zur lösbaren Befestigung der Dachkonstruktion am Zweirad oder Lastenrad eingerichtet ist. Die Befestigungsstelle und/oder ein der Befestigungsstelle zugeordneter Befestigungspunkt können als Schnellverbinder ausgebildet sein. Die Schnellverbinder können jeweils wenigstens eine Flügelschraube aufweisen. Auch ist denkbar, dass die Schnellverbinder ebenfalls eine Clipmechanik aufweisen.

Ein erfindungsgemäßes Zweirad oder Lastenrad kann als Tiefeinsteiger ausgebildet sein. Dazu kann es einen Rahmen aufweisen, der nicht der klassischen Diamantrahmen-Form entspricht. Insbesondere kann das Zweirad oder Lastenrad ohne eine zu der Diamantrahmen-Form gehörige Querstrebe ausgebildet sein. Somit kann das Zweirad oder Lastenrad beispielsweise bei montierter Dachkonstruktion leichter bestiegen und/oder verlassen werden. Gleichwohl kann das Zweirad oder Lastenrad für denkbare Sonderanwendungen mit höherer Belastung auch einen Trapez-Rahmen mit abgesenkter Querstrebe aufweisen.

Das Zweirad oder Lastenrad kann einen Sattel aufweisen, der seitlich an einem Sattelrohr des Zweirads anordenbar und/oder angeordnet ist. Insbesondere kann die Sitzfläche des Sattels zum Sattelrohr horizontal versetzt, insbesondere nach vorn versetzt, sein.

Somit kann im Sattelrohr ein zusätzlicher, umschlossener Raum zur Verfügung stehen. Der umschlossene Raum des Sattelrohrs kann auch von oben zugänglich sein. Der Raum kann beispielsweise bei einem elektrisch motorisierten Zweirad zur Aufnahme eines Stromspeichers ausgebildet sein. Der Stromspeicher kann ein In-Tube-Akkumuiator sein. Er kann eine besonders große Kapazität, beispielsweise 0,7 kWh oder mehr, aufweisen. Ein weiterer Vorteil ist, dass der Schwerpunkt des Stromspeichers sehr tief liegen kann. Zudem kann sein Gewicht besonders günstig verteilt sein.

Allgemein ist denkbar, dass in einem Rahmen des jeweiligen Zweirads wenigstens ein Stromspeicher, insbesondere ein Akkumulator, aufnehmbar ist. Der wenigstens eine Akku kann aus dem Rahmen entnehmbar sein. Dazu kann der Rahmen eine Entnahmeöffnung aufweisen.

Durch zusätzliche Maßnahmen kann der Komfort für den Benutzer bei der Benutzung des erfindungsgemäßen Zweirads noch weiter gesteigert werden. Dazu ist insbesondere denkbar, Griffe des Lenkerbügels und/oder den gesamten Lenkerbügel beheizbar auszugestalten. Dazu können die Griffe elektrisch betreibbare Heizelemente aufweisen.

Am Zweirad oder Lastenrad, insbesondere am Lenkervorbau und/oder am Lenkerbügel, können Halterungen für ein Mobiltelefon, ein Tablet, eine Trinkflasche und/oder dergleichen vorgesehen sein.

Das jeweilige Zweirad oder Lastenrad kann neben einer Frontgepäckaufnahme alternativ oder ergänzend eine Heckgepäckaufnahme, beispielsweise einen Gepäckträger, aufweisen.

Denkbar ist auch, dass am Zweirad oder Lastenrad wenigstens ein Kindersitz anordenbar und/oder angeordnet ist. Der Kindersitz kann insbesondere im Bereich einer der Gepäckaufnahmen, insbesondere der Frontgepäckaufnahme, anordenbar bzw. angeordnet sein. Insbesondere kann auch vorgesehen sein, dass auch ein Kind, das auf dem Kindersitz Platz genommen hat, durch die montierte Dachkonstruktion schützbar ist.

Bei einer besonders bevorzugten Ausgestaltung des Zweirads oder Lastenrads weist dieses wenigstens einen Bordcomputer auf. Der Bordcomputer kann eingerichtet sein, Daten, insbesondere Fahrdaten und/oder Zustandsdaten, des Zweirads aufzuzeichnen und/oder dem Benutzer anzuzeigen. Auch kann der Bordcomputer eingerichtet sein, Steuerungsaufgaben, beispielsweise bei einem elektrisch motorisierten Zweirad oder Lastenrad Lade- und/oder Entladevorgänge des Stromspeichers, zu erledigen.

Der Bordcomputer kann auch eingerichtet sein, mit einem weiteren Rechnersystem, beispielsweise einem Mobiltelefon und/oder einem entfernten Zentralrechnersystem, eine Datenverbindung aufzubauen. Über eine solche Datenverbindung kann der Bordcomputer bzw. das Zweirad oder Lastenrad steuerbar sein. Denkbar ist auch, dass über die Datenverbindung Informationen, beispielsweise aktuelle Fahrdaten, vom Zweirad oder Lastenrad abgerufen und vorzugsweise auf dem Mobiltelefon dargestellt werden können. Es können Positionsinformationen über die Verbindung übertragbar sein. Ein Schutzsystem zum Schutz vor Diebstahl und/oder Beschädigungen kann vorgesehen sein. Hierfür benötigte Daten können über die Datenverbindung übertragbar sein.

Die Sicherheit des Benutzers des Zweirads oder Lastenrads lässt sich verbessern, wenn das Zweirad oder Lastenrad, insbesondere die Dachkonstruktion und/oder der Beinschutz, lichtreflektierende Markierungen und/oder wenigstens eine Leuchte aufweisen.

Auch ist denkbar, am Zweirad oder Lastenrad, insbesondere an der Dachkonstruktion und/oder am Beinschutz, wenigstens einen Sensor anzuordnen und vorzugsweise mit dem Bordcomputer zu verbinden.

Ist der Sensor als Temperatursensor ausgebildet, so lässt sich die Umgebungstemperatur überwachen. Dann kann bei Unterschreiten und/oder bei Überschreiten einer kritischen Temperatur der Benutzer informiert und beispielsweise angehalten werden, die Fahrt zu unterbrechen oder mit geringerer Geschwindigkeit fortzusetzen. Somit können Unterkühlungen und/oder Überhitzungen des Benutzers und/oder eines Teils des Zweirads oder Lastenrads vermieden werden.

Denkbar ist auch, dass der Sensor als Abstandssensor ausgebildet ist. Dann lassen sich Abstände des Zweirads oder Lastenrads und/oder des Benutzers und/oder eines Gepäcks und/oder dergleichen zur Umgebung des Zweirads überwachen. Insbesondere kann der Benutzer beispielsweise vor einer drohenden Kollision mit einem herannahenden, weiteren Fahrzeug gewarnt werden. Ist am Zweirad oder Lastenrad ferner ein Rettungssystem, beispielsweise ein Airbagsystem, angeordnet, so kann das Rettungssystem in Abhängigkeit von dem Messsignal des Abstandssensors auslösbar sein. Somit lassen sich selbst bei montierter Dachkonstruktion und selbst bei montiertem Beinschutz im Falle eines Unfalls größere Schäden oder Verletzungen des Benutzers vermeiden.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und werden in der nachfolgenden Beschreibung näher erläutert.

### Es zeigen:

**Fig. 1** eine perspektivische Darstellung eines Zweirads mit einer Dachkonstruktion von schräg vorn;
**Fig. 2** das Zweirad mit der Dachkonstruktion in einer Ansicht von vorn;
**Fig. 3** das Zweirad mit der Dachkonstruktion in einer Ansicht von hinten;
**Fig. 4** das Zweirad mit der Dachkonstruktion in einer Seitenansicht;
**Fig. 5** eine weitere Dachkonstruktion;
**Fig. 6** ein weiteres Zweirad;
**Fig. 7** eine zusammengefaltete Dachkonstruktion.

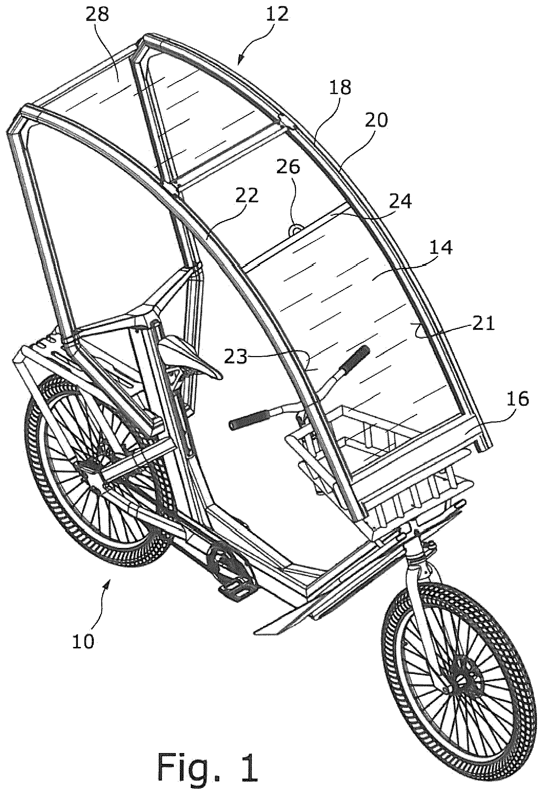

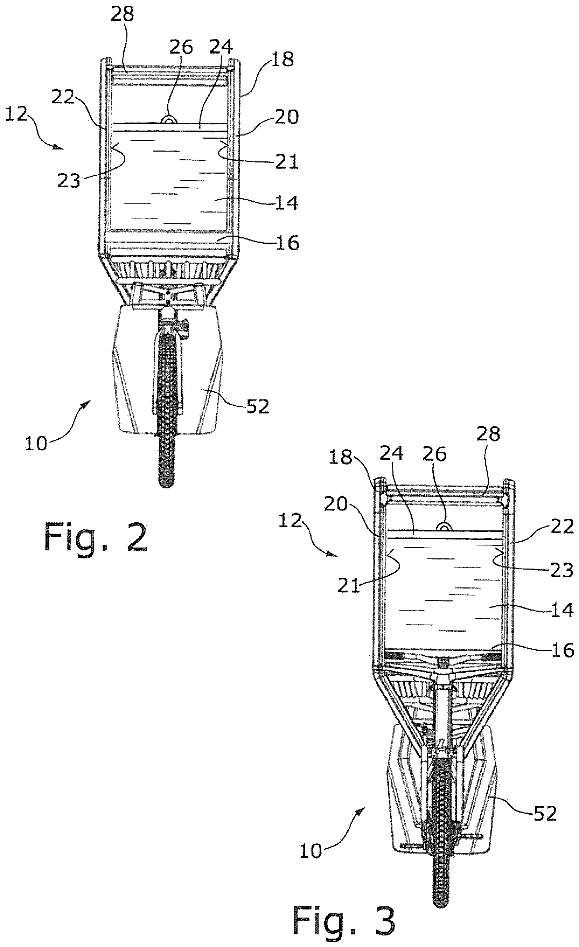

**Fig. 1** zeigt in einer perspektivischen Darstellung von schräg vorn ein Zweirad **10** mit einer Dachkonstruktion **12.** Hierzu ergänzend zeigen **Fig. 2** das Zweirad 10 mit seiner Dachkonstruktion 12 von vorn und **Fig. 3** von hinten.

Das Zweirad 10 ist ein zweirädriges, insbesondere echt einspuriges Zweirad.

Die Dachkonstruktion ist - wie nachfolgend noch näher erläutert wird - zum Wetterschutz eines Benutzers des Zweirads 10 eingerichtet.

Die Dachkonstruktion 12 ist auf dem Zweirad 10 montiert. Sie weist eine Wetterschutzeinrichtung **14** auf. Die Wetterschutzeinrichtung 14 ist transparent. Des Weiteren ist die Wetterschutzeinrichtung 14 aus einem, insbesondere flexibel verformbaren, Kunststoffmaterial. Sie dient insbesondere zum Schutz des Benutzers vor wetterbedingten Einflüssen wie beispielsweise vor Regen.

Die Wetterschutzeinrichtung 14 kann nach Bedarf auf die Dachkonstruktion 12 aufgezogen oder - wie in Fig. 1 dargestellt - teilweise aufgezogen sein. Insbesondere wenn sie nicht benötigt wird, lässt sie sich mittels einer Aufwickelanordnung **16** aufwickeln und damit verstauen. Anschließend lässt sie sich bei Bedarf wieder mittels der Aufwickelanordnung 16 abwickeln und auf die Dachkonstruktion 12 aufziehen.

Die Dachkonstruktion 12 weist ferner eine Tragstruktur **18** auf. Die Tragstruktur 18 weist wiederum mehrere Befestigungsstellen zur lösbaren Befestigung der Dachkonstruktion 12 am Zweirad 10 auf, von denen aus Darstellungsgründen lediglich zwei Befestigungsstellen **17, 19** in Fig. 1 markiert sind. Sie weist ferner neben mehreren Querstreben zwei Tragstrukturstangen **20, 22** auf. Die Tragstrukturstangen 20, 22 verlaufen zueinander parallel. Sie sind als Profilelemente, insbesondere als Aluminiumprofilelemente, ausgebildet.

Die Tragstrukturstangen 20, 22 weisen jeweils eine Führungsnut **21** bzw. **23** auf. Mittels der Führungsnuten 21, 23 ist die Wetterschutzeinrichtung 14 entlang der Tragstrukturstangen 20, 22 geführt. Die Wetterschutzeinrichtung 14 ist eine, insbesondere wasserfeste und besonders bevorzugt flexible, Schutzplane.

Die Wetterschutzeinrichtung 14 lässt sich manuell verstellen. Dazu weist sie an ihrem einen, insbesondere von der Aufwickelanordnung 16 wegweisenden, Ende eine Randstange **24** mit einem Griff **26** auf.

Die Aufwickelanordnung 16 ist nach Art eines Roll-ups ausgebildet. Insbesondere weist sie ein (in Fig. 1 bis Fig. 3 nicht darstellbares) Federelement auf, gegen dessen Spannung die Wetterschutzeinrichtung 14 auf die Dachkonstruktion 12 aufgezogen werden kann.

Entlang der Führungsnuten 21, 23 sind mehrere Rastpositionen vorgesehen, an denen sich die Randstange 24 zumindest temporär verrasten lässt, sodass die Wetterschutzeinrichtung 14 unterschiedlich weit auf die Dachkonstruktion 12 aufgezogen werden kann und in der jeweiligen Position verbleibt.

Kommt die Wetterschutzeinrichtung 14, insbesondere deren Randstange 24, frei, insbesondere durch Lösen der Verrastung der Randstange 24 an den Tragstrukturstangen 20, 22, so wird die Wetterschutzeinrichtung 14 durch die Aufwickeianordnung 16, insbesondere durch das Federelement der Aufwickelanordnung 16, aufgewickelt.

Die Wetterschutzeinrichtung 14 befindet sich in einem Frontbereich der Dachkonstruktion 12. Die Wetterschutzeinrichtung 14 deckt aber vorzugsweise sowohl den Frontbereich der Dachkonstruktion 12 als auch den Deckenbereich ab.

Denkbar ist auch, dass die Dachkonstruktion 12 in einem Deckenbereich, insbesondere als Himmel, eine weitere separate Wetterschutzeinrichtung 28 aufweist. Auch die Wetterschutzeinrichtung 28 ist transparent. Denkbar ist, dass die Wetterschutzeinrichtung 28 alternativ nicht - oder lediglich teilweise - transparent ist.

Denkbar ist auch, dass die Wetterschutzeinrichtung 28 ebenfalls mit einer Aufwickelanordnung entsprechend der Aufwickeianordnung 16 verbunden ist und dadurch ebenfalls ab- bzw. aufwickelbar ist.

Anstelle einer Plane wie der Wetterschutzeinrichtung 28 kann, insbesondere als Himmel der Dachkonstruktion 12, auch eine starre Verkleidung vorgesehen sein. Beispielsweise können ein oder mehrere, in der Regel aus einem steifen Material ausgebildete, Solarzellen im Bereich des Himmels der Dachkonstruktion 12 angeordnet sein.

Weiter ist denkbar, dass die Dachkonstruktion 12 auch heckseitig eine Verkleidung, insbesondere eine weitere Wetterschutzeinrichtung, aufweist. Auch eine solche Wetterschutzeinrichtung kann an eine Aufwickelanordnung angebunden sein.

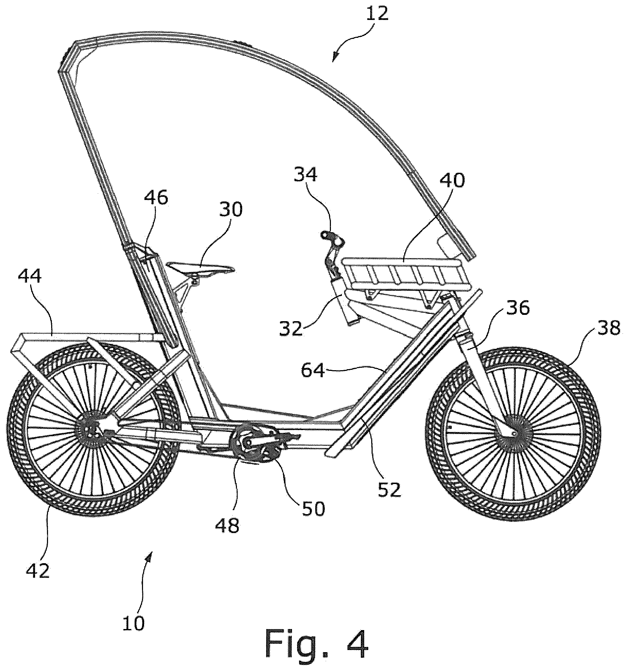

**Fig. 4** zeigt nun das Zweirad 10 mit der Dachkonstruktion 12 in einer Seitenansicht.

Das Zweirad 10 ist als Aufsitz-Zweirad ausgebildet. Dazu weist es einen Sattel **30** auf, der derart positioniert und gestaltet ist, dass ein Benutzer des Zweirads 10 aufrecht sitzend oder zumindest im Wesentlichen aufrecht sitzend mit dem Zweirad 10 fahren kann.

Weiter weist das Zweirad 10 einen Lenkervorbau **32** auf. Am Lenkervorbau 32 ist ein Lenkerbügel **34** angeordnet.

Der Lenkervorbau 32 ist von einer Vorderradgabel **36** getrennt angeordnet. Insbesondere ist der Lenkervorbau 32 relativ zur Vorderradgabel 36 nach hinten versetzt.

Dazu ist der Lenkerbügel 34 über ein (in Fig. 4 nicht darstellbares) Lenkgestänge mit der Vorderradgabel 36 mechanisch gekoppelt. Mittels des Lenkgestänges lässt sich somit ein Vorderrad **38** des Zweirads 10 durch den Lenkerbügel 34 lenken.

Im Zwischenbereich zwischen dem Lenkervorbau 32 und der Vorderradgabel 36 ist eine Frontgepäckaufnahme **40** angeordnet.

Die Dachkonstruktion 12 ist derart dimensioniert, dass sie frontseitig vor dem Lenker 34 und vorzugsweise auch vor der Frontgepäckaufnahme 40 mit dem Zweirad 10 verbunden ist. Heckseitig ist die Dachkonstruktion 12 hinter dem Sattel 30 mit dem Zweirad 10 verbunden.

Somit kann die Dachkonstruktion 12 nicht nur einen auf dem Sattel 30 sitzenden Benutzer, sondern auch in der Frontgepäckaufnahme 40 aufgenommenes Gepäck, beispielsweise vor Wettereinflüssen, schützen.

Die Frontgepäckaufnahme 40 ist als Box ausgebildet.

Oberhalb eines Hinterrades **42** des Zweirads 10 befindet sich eine Heckgepäckaufnahme **44.**

Das Zweirad 10 ist elektromotorisch antreibbar. Beispielsweise kann es ein Pedelec oder ein E-Bike sein. Zur Stromspeicherung weist es einen in einem Sattelrohr **46** unterbringbaren bzw. untergebrachten Akkumulator auf. Zusätzlich weist es einen in einem vorderen Rahmenrohr **64** unterbringbaren bzw. untergebrachten Akkumulator auf.

Über eine (in Fig. 4 nicht darstellbare) Entnahmeöffnung ist der Akkumulator einem Innenraum des Sattelrohrs 46 entnehmbar bzw. in diesen Innenraum einsetzbar.

Um diesen Innenraum des Sattelrohrs 46 einzurichten bzw. freizuhalten, ist der Sattel 30 lediglich seitlich am Sattelrohr 46, insbesondere höhenverstellbar, angeordnet.

Weiter weist das Zweirad 10 neben einer Pedalanordnung **48** einen Unterstützungsmotor **50** auf. Der Unterstützungsmotor 50 ist durch die im Sattelrohr 46 und im vorderen Rahmenrohr 64 untergebrachten Akkumulatoren speisbar.

Um einen einfachen Ein- bzw. Ausstieg zu ermöglichen, ist das Zweirad 10 als Tiefeinsteiger ausgelegt. Es weist somit keine einem Diamantrahmen gleiche Querstrebe auf, die ein Benutzer beim Ein- und/oder Aussteigen überwinden müsste.

Das Zweirad 10 weist weiter einen Beinschutz **52** auf (siehe auch Fig. 2 und Fig. 3). Der Beinschutz 52 ist zweiteilig ausgebildet. Er reicht in etwa von der Höhe der Frontgepäckaufnahme 40 herunter bis etwa zur Höhe des Unterstützungsmotors 50 und/oder der Pedalanordnung 48. Der Beinschutz 52 ist mittels wenigstens einer Clipmechanik abnehmbar am Zweirad 10 angeordnet.

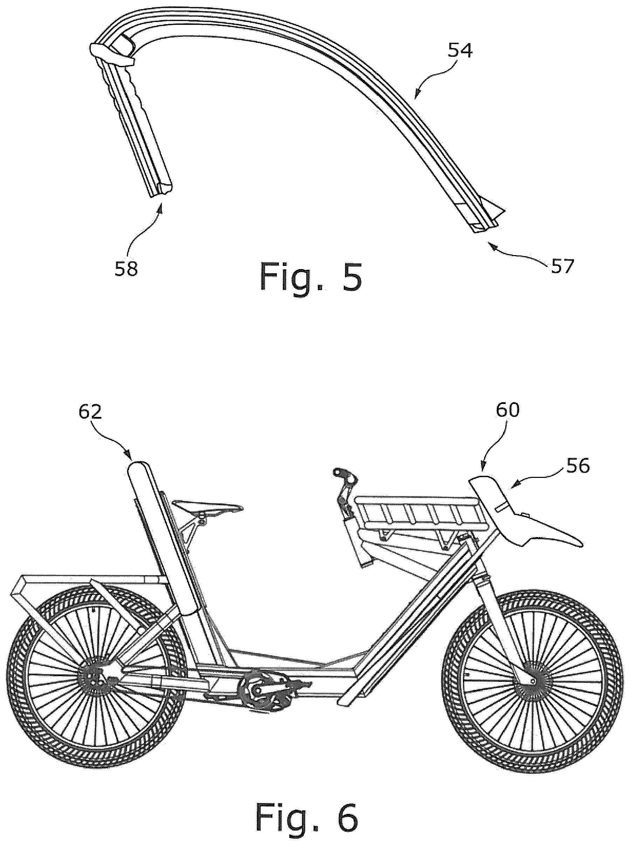

**Fig.** 5 zeigt in einer Seitenansicht eine weitere Dachkonstruktion **54.** Die Dachkonstruktion 54 entspricht zumindest im Wesentlichen der vorangehend beschriebenen Dachkonstruktion 12.

Die Dachkonstruktion 54 ist abnehmbar an einem Zweirad anordenbar. Ein entsprechend zugehöriges Zweirad **56** zeigt **Fig. 6** in einer Seitenansicht.

Zur reversibel lösbaren Verbindung der Dachkonstruktion 54 (Fig. 5) mit dem Zweirad 56 weist die Dachkonstruktion mehrere Befestigungsstellen auf, von denen zwei Befestigungsstellen **57, 58** in Fig. 5 markiert sind. Die Befestigungsstellen können mit mehreren Befestigungsgegenstellen des Zweirads 56, von denen wiederum zwei Befestigungsgegenstellen **60, 62** in Fig. 6 markiert sind, zusammenwirken, um die Dachkonstruktion 54 mit dem Zweirad 56 lösbar zu verbinden. Dazu sind die Befestigungsstellen 57, 58 sowie die Befestigungsgegenstellen 60, 62 als Rastmechanismen ausgebildet.

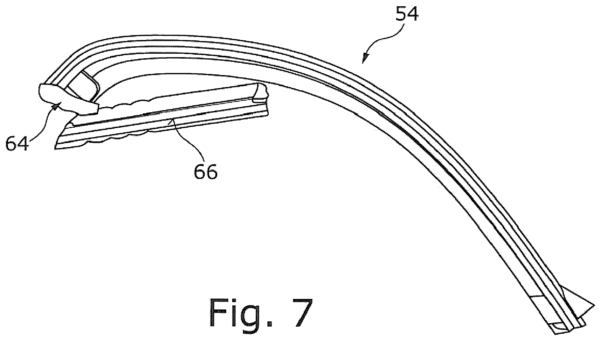

Auch weist die Dachkonstruktion 54 ein Scharniergelenk 64 auf, wie sich **Fig. 7** entnehmen lässt.

Mittels des Scharniergelenks 64 lässt sich ein Teilstück **66** der Tragstruktur der Dachkonstruktion 54 einklappen. Die Dachkonstruktion 54 ist somit faltbar.

Im in Fig. 7 dargestellten, zusammengefalteten Zustand der Dachkonstruktion 54 lässt sich diese somit einfach transportieren und/oder platzsparend lagern.

### Bezugszeichenliste

- 10: Zweirad
- 12: Dachkonstruktion
- 14: Wetterschutzeinrichtung
- 16: Aufwickelanordnung
- 17: Befestigungsstelle
- 18: Tragstruktur
- 19: Befestigungsstelle
- 20: Tragstrukturstange
- 21: Führungsnut
- 22: Tragstrukturstange
- 23: Führungsnut
- 24: Randstange
- 26: Griff
- 28: Wetterschutzeinrichtung
- 30: Sattel
- 32: Lenkervorbau
- 34: Lenkerbügel
- 36: Vorderradgabel
- 38: Vorderrad
- 40: Frontgepäckaufnahme
- 42: Hinterrad
- 44: Heckgepäckaufnahme
- 46: Sattelrohr
- 48: Pedalanordnung
- 50: Unterstützungsmotor
- 52: Beinschutz
- 54: Dachkonstruktion
- 56: Zweirad
- 57: Befestigungsstelle
- 58: Befestigungsstelle
- 60: Befestigungsgegenstelle
- 62: Befestigungsgegenstelle
- 66: Teilstück

## Patentansprüche

1. **Dachkonstruktion** (12, 54), für ein Fahrzeug, insbesondere für ein Zweirad (10, 56) zum Wetterschutz eines Benutzers des Zweirads (10, 56),
**dadurch gekennzeichnet,**
**dass** die Dachkonstruktion (12, 54) eine Tragstuktur (18), die eine Befestigungsstelle (19) zur Befestigung an dem Fahrzeug, insbesondere Zweirad (10, 56), aufweist, und eine aufwickelbare Wetterschutzeinrichtung (14, 28) umfasst, wobei die Tragstruktur (18) eine Aufwickelanordnung (16) zum Auf- und/oder Abwickeln der Wetterschutzeinrichtung (14, 28) aufweist.

2. Dachkonstruktion nach Anspruch 1, **dadurch gekennzeichnet, dass** die Tragstruktur (18) wenigstens zwei zumindest abschnittsweise zueinander parallel verlaufende Tragstrukturstangen (20, 22) aufweist.

3. Dachkonstruktion nach dem vorhergehenden Anspruch, **dadurch gekennzeichnet, dass** die Wetterschutzeinrichtung (14, 28) an den beiden Tragstrukturstangen (20, 22) führbar und/oder geführt ist und/oder dass die Wetterschutzeinrichtung (14, 28) mittels wenigstens eines Reißverschlusses und/oder wenigstens eines Punktverbinders an den beiden Tragstrukturstangen (20, 22) befestigbar ist.

4. Dachkonstruktion nach dem vorhergehenden Anspruch, **dadurch gekennzeichnet, dass** zumindest ein Teilstück (66) der Dachkonstruktion (12, 54), insbesondere wenigstens eine der Tragstrukturstangen (20, 22), faltbar ist.

5. Dachkonstruktion nach einem der vorhergehenden Ansprüche,
**dadurch gekennzeichnet, dass** die Dachkonstruktion (12, 54) eine Reinigungsvorrichtung, beispielsweise einen Scheibenwischer, aufweist.

6. Dachkonstruktion nach einem der vorhergehenden Ansprüche,
**dadurch gekennzeichnet, dass** die Dachkonstruktion (12, 54) wenigstens eine Solarzelle aufweist.

7. **Zweirad** (10, 56) oder Lastenrad, an dem eine
Dachkonstruktion (12, 54) nach einem der vorhergehenden Ansprüche anordenbar und/oder angeordnet ist.

8. Zweirad oder Lastenrad nach dem vorhergehenden Anspruch, umfassend
- einen Lenkervorbau (32) mit einem mit einer Vorderradgabel (36) des Zweirads (10, 56) oder Lastenrads, insbesondere mechanisch, gekoppelten Lenkerbügel (34),
- wobei der Lenkervorbau (32) von der Vorderradgabel (36) getrennt angeordnet, insbesondere nach hinten versetzt, ist.

9. **Zweirad** (10, 56) oder Lastenrad, ausgebildet als Aufsitz-(Zwei)rad und umfassend
- einen Lenkervorbau (32) mit einem mit einer Vorderradgabel (36) des Zweirads (10, 56) oder Lastenrads mechanisch gekoppelten Lenkerbügel (34),
- wobei der Lenkervorbau (32) von der Vorderradgabel (36) getrennt angeordnet, insbesondere nach hinten versetzt, ist.

10. Zweirad oder Lastenrad nach Anspruch 9, **dadurch gekennzeichnet, dass** an dem Zweirad (10, 56) oder Lastenrad eine Dachkonstruktion (12, 54), insbesondere eine
Dachkonstruktion (12, 54) nach einem der Ansprüche 1 bis 6, anordenbar und/oder angeordnet ist.

11. Zweirad oder Lastenrad nach einem der Ansprüche 8 bis 10, **dadurch gekennzeichnet, dass** vor dem Lenkervorbau (32) eine Frontgepäckaufnahme (40) ausgebildet und/oder angeordnet ist.

12. Zweirad nach einem der Ansprüche 7 bis 11, **dadurch gekennzeichnet, dass** im Bereich des Vorderrads (38) des Zweirads (10, 56) oder Lastenrads wenigstens ein Beinschutz (52) zum Schutz, insbesondere zum Wetterschutz, der Beine des Benutzers anordenbar und/oder angeordnet ist.

13. Zweirad nach dem vorhergehenden Anspruch, **dadurch gekennzeichnet, dass** der Beinschutz (52) abnehmbar ausgebildet ist.

14. Zweirad nach einem der Ansprüche 7, 8 oder 10 oder nach einem der Ansprüche 11 bis 13 in Verbindung mit Anspruch 10, **dadurch gekennzeichnet, dass** die Dachkonstruktion (12, 54) abnehmbar ausgebildet ist.

15. Zweirad oder Lastenrad nach einem der Ansprüche 7 bis 14, **dadurch gekennzeichnet, dass** das Zweirad (10, 56) oder Lastenrad als Tiefeinsteiger ausgebildet ist.

## Geänderte Patentansprüche

### Geänderte Patentansprüche gemäss Regel 137(2) EPÜ.

1. **Dachkonstruktion** (12, 54), für ein Fahrzeug, insbesondere für ein Zweirad (10, 56) zum Wetterschutz eines Benutzers des Zweirads (10, 56), wobei die Dachkonstruktion (12, 54) eine Tragstuktur (18), die eine Befestigungsstelle (19) zur Befestigung an dem Fahrzeug, insbesondere Zweirad (10, 56), aufweist, und eine aufwickelbare Wetterschutzeinrichtung (14, 28) umfasst, wobei die Tragstruktur (18) eine Aufwickelanordnung (16) zum Auf- und/oder Abwickeln der Wetterschutzeinrichtung (14, 28) aufweist und die Tragstruktur (18) wenigstens zwei zumindest abschnittsweise zueinander parallel verlaufende Tragstrukturstangen (20, 22) aufweist, **dadurch gekennzeichnet, dass** die Wetterschutzeinrichtung (14, 28) an den beiden Tragstrukturstangen (20, 22) geführt ist.

2. Dachkonstruktion nach dem vorhergehenden Anspruch, **dadurch gekennzeichnet, dass** die Wetterschutzeinrichtung (14, 28) mittels wenigstens eines Reißverschlusses und/oder wenigstens eines Punktverbinders an den beiden Tragstrukturstangen (20, 22) befestigbar ist.

3. Dachkonstruktion nach Anspruch 1 oder 2, **dadurch gekennzeichnet, dass** zumindest ein Teilstück (66) der Dachkonstruktion (12, 54), insbesondere wenigstens eine der Tragstrukturstangen (20, 22), faltbar ist.

4. Dachkonstruktion nach einem der vorhergehenden Ansprüche, **dadurch gekennzeichnet, dass** die Dachkonstruktion (12, 54) eine Reinigungsvorrichtung, beispielsweise einen Scheibenwischer, aufweist.

5. Dachkonstruktion nach einem der vorhergehenden Ansprüche, **dadurch gekennzeichnet, dass** die Dachkonstruktion (12, 54) wenigstens eine Solarzelle aufweist.

6. **Zweirad** (10, 56) oder Lastenrad, an dem eine Dachkonstruktion (12, 54) nach einem der vorhergehenden Ansprüche angeordnet ist.

7. Zweirad oder Lastenrad nach dem vorhergehenden Anspruch, umfassend
- einen Lenkervorbau (32) mit einem mit einer Vorderradgabel (36) des Zweirads (10, 56) oder Lastenrads, insbesondere mechanisch, gekoppelten Lenkerbügel (34),
- wobei der Lenkervorbau (32) von der Vorderradgabel (36) getrennt angeordnet, insbesondere nach hinten versetzt, ist.

8. Zweirad oder Lastenrad nach einem der Ansprüche 6 oder 7, **dadurch gekennzeichnet, dass** vor dem Lenkervorbau (32) eine Frontgepäckaufnahme (40) ausgebildet und/oder angeordnet ist.

9. Zweirad nach einem der Ansprüche 6 bis 8, **dadurch gekennzeichnet, dass** im Bereich des Vorderrads (38) des Zweirads (10, 56) oder Lastenrads wenigstens ein Beinschutz (52) zum Schutz, insbesondere zum Wetterschutz, der Beine des Benutzers anordenbar und/oder angeordnet ist.

10. Zweirad nach dem vorhergehenden Anspruch, **dadurch gekennzeichnet, dass** der Beinschutz (52) abnehmbar ausgebildet ist.

11. Zweirad nach einem der Ansprüche 6 bis 10, **dadurch gekennzeichnet, dass** die Dachkonstruktion (12, 54) abnehmbar ausgebildet ist.

12. Zweirad oder Lastenrad nach einem der Ansprüche 6 bis 11, **dadurch gekennzeichnet, dass** das Zweirad (10, 56) oder Lastenrad als Tiefeinsteiger ausgebildet ist.
